Europäisches Patentamt

European Patent Office

Office européen des brevets

(11) Numéro de publication : **0 487 403 B1**

## (12) FASCICULE DE BREVET EUROPEEN

(45) Date de publication du fascicule du brevet :
**12.04.95 Bulletin 95/15**

(51) Int. Cl.$^6$ : **G01T 1/164**

(21) Numéro de dépôt : **91403106.7**

(22) Date de dépôt : **19.11.91**

(54) **Procédé de détection nucléaire à correction de potentiel de base et appareil (notamment gamma-caméra) correspondant.**

(30) Priorité : **21.11.90 FR 9014532**

(43) Date de publication de la demande :
**27.05.92 Bulletin 92/22**

(45) Mention de la délivrance du brevet :
**12.04.95 Bulletin 95/15**

(84) Etats contractants désignés :
**DE GB NL**

(56) Documents cités :
**FR-A- 2 546 632**
**FR-A- 2 552 552**
**PATENT ABSTRACTS OF JAPAN, vol. 8, no. 89 (P-270)[1526], 24 avril 1984 & JP-A-59 3377**

(73) Titulaire : **COMMISSARIAT A L'ENERGIE ATOMIQUE**
**31-33, rue de la Fédération**
**F-75015 Paris (FR)**

(72) Inventeur : **Mestais, Corinne**
**Le Prieuré - Bernin**
**F-38190 Brignoud (FR)**
Inventeur : **Thevenin, Bernard**
**1 Chemin La Bourrelière**
**F-38120 Saint Egreve (FR)**

(74) Mandataire : **Signore, Robert et al**
**c/o BREVATOME**
**25, rue de Ponthieu**
**F-75008 Paris (FR)**

# Description

La présente invention a pour objet un procédé de détection nucléaire à correction de potentiel de base et un appareil correspondant. Cet appareil peut être, par exemple, une gamma-caméra ou un spectromètre, ou tout autre appareil destiné à mesurer une caractéristique d'un rayonnement nucléaire. Dans le premier cas, l'invention trouve une application dans le domaine médical où les gamma-caméras sont utilisées pour produire des images d'organes en vue de l'établissement d'un diagnostic. La gamma-caméra est de préférence à scintillation, du type ANGER, dont le brevet US-A-3 011 057 décrit le fonctionnement dans ses principes et ses moyens de réalisation.

Les gamma-caméras sont utilisées en médecine nucléaire pour visualiser la répartition, dans un organe, de molécules marquées par un isotope radioactif préalablement injecté au patient. Une gamma-caméra comprend généralement un collimateur pour limiter l'angle d'incidence des photons gamma émis par l'organe à étudier, un cristal scintillateur pour transformer les photons gamma en photons lumineux ou scintillations, et un réseau de tubes photomultiplicateurs, qui transforment les scintillations en impulsions électriques dites "contributions électriques" de tubes. Une gamma-caméra comprend en outre des circuits électroniques pour produire, à partir des contributions électriques des tubes, des signaux de coordonnées X et Y indiquant le lieu où s'est produite la scintillation, ainsi qu'un signal de validation V quand l'amplitude de la scintillation appartient à une bande d'énergie prédéterminée.

Cette chaîne de détection peut être suivie d'un ensemble de visualisation comportant généralement un oscilloscope cathodique commandé par les signaux de coordonnées X, Y et par le signal de validation V, pour visualiser par un point lumineux sur l'écran le point d'impact du photon gamma sur le cristal. L'ensemble de visualisation peut éventuellement comporter un dispositif photographique pour former une image de l'organe observé, par intégration d'un grand nombre de points lumineux produits sur l'écran. Il peut, par ailleurs, comprendre un dispositif de traitement numérique des images. Un dispositif de traitement numérique des images peut être utilisé pour reconstruire des images de coupes d'organes afin de produire des tomographies de ceux-ci. Dans ce dernier cas, des algorithmes de reconstruction d'images identiques à ceux qui sont utilisés en tomodensitométrie sont mis en oeuvre.

Entre autres qualités, une gamma-caméra doit posséder une bonne résolution spatiale (c'est-à-dire une capacité à distinguer de petites sources radioactives rapprochées), une bonne réponse en taux de comptage, (c'est-à-dire une capacité à traiter un grand nombre d'événements par unité de temps), et une qualité d'image indépendante de l'énergie de l'isotope considéré. La résolution spatiale dépend de la précision du calcul des coordonnées X et Y. La qualité de l'élaboration de ces coordonnées dépend essentiellement des lois physiques régissant le fonctionnement des différentes parties de la gamma-caméra. Ainsi, l'interaction d'un photon gamma avec le cristal donne naissance à une scintillation lumineuse dont l'intensité décroît exponentiellement avec le temps. La constante de temps de cette décroissance est caractéristique du cristal scintillateur utilisé. Pour un cristal d'iodure de sodium activé au thallium (Nal, Tl), elle est de l'ordre de 300 nanosecondes. A une énergie donnée du photon gamma incident, le nombre de photons lumineux de la scintillation obéit à la loi statistique de POISSON. Cette scintillation est vue par plusieurs tubes photomultiplicateurs simultanément. Les photons lumineux composant cette scintillation arrachent des photoélectrons aux photocathodes des tubes photomultiplicateurs. Le nombre de photoélectrons arrachés obéit aussi, pour une scintillation donnée, à la loi statistique de POISSON. Cela signifie que la contribution électrique d'un tube photomultiplicateur recevant une scintillation présente une amplitude dont la valeur suit une distribution statistique de POISSON. La valeur moyenne de cette amplitude est fonction de l'énergie des photons lumineux incidents.

Comme une scintillation est vue par plusieurs tubes photomultiplicateurs simultanément, la détermination de l'emplacement de cette scintillation sur le cristal, elle-même représentative du lieu d'émission du photon gamma d'excitation, est obtenue en calculant l'emplacement du barycentre des contributions électriques délivrées par l'ensemble des tubes photomultiplicateurs. Ce calcul s'effectue simplement, selon la technique ANGER visée plus haut, en injectant les contributions électriques au travers d'un jeu de matrices de résistances. Les valeurs des résistances des matrices sont fonction, pour des matrices dites de localisation, des positions des tubes photomultiplicateurs auxquels elles sont raccordées. Les signaux électriques analogiques obtenus $x^+$, $x^-$, $y^+$, $y^-$, dits "impulsions pondérées" traduisent la position de la scintillation par rapport aux axes X et Y.

Le problème le plus difficile à résoudre consiste, pour une scintillation donnée, à déterminer le plus exactement possible l'intégrale du barycentre des contributions électriques sur une période de l'ordre de trois fois la constante de temps de décroissance des scintillations du cristal scintillateur. La durée d'intégration dépend de la constante de temps du cristal. La précision de la mesure est entachée d'erreur due à la fluctuation statistique de POISSON. En effet, l'écart type de la fluctuation d'amplitude des contributions selon la statistique de POISSON est inversement proportionnelle à la racine carrée du nombre de photoélectrons arrachés. Ainsi, plus l'intégration est longue (jusqu'à trois fois la constante de temps de décroissance de la scintillation), plus le nombre de photoélectrons pris en compte est important, plus l'écart type est faible, et donc plus la valeur moyenne de cette contribution est appréciée avec exactitude.

En fait, l'opération de calcul de l'emplacement du barycentre étant une opération linéaire, il est plus économique de réaliser cette intégration à la sortie de chacune des matrices de résistance du jeu de matrices sur les impulsions pondérées. On notera au passage que la durée d'intégration est directement liée à la qualité de la résolution spatiale de la gamma-caméra et que cette qualité s'obtient au détriment du taux de comptage, c'est-à-dire au détriment du nombre d'événements par seconde pris en compte.

Cette opération d'intégration ne va pas sans quelques difficultés. La principale réside dans la présence de tensions continues permanentes venant se superposer aux impulsions pondérées et qui, introduites dans des intégrateurs, faussent d'autant plus la valeur du signal délivré par ceux-ci que la durée d'intégration est longue. L'origine de ces tensions continues est principalement due aux amplificateurs à gain variable interposés entre chaque matrice de résistances et un intégrateur correspondant. Ces amplificateurs à gain variable sont utilisés pour deux raisons : d'abord ils servent à choisir la gamme d'énergie à étudier, et ensuite ils permettent une adaptation d'amplitude des impulsions pondérées à la dynamique de fonctionnement des intégrateurs utilisés. Ces tensions continues parasites peuvent avoir d'autres origines, et résulter notamment d'un effet dit d'empilement des scintillations.

Le potentiel électrique résultant de ces tensions continues décale ce qu'on appelle communément le potentiel de base des intégrateurs. Le brevet américain US-A-3 984 689 délivré le 5 octobre 1976 à Roger E. ARSENAUX indique qu'aux niveaux élevés de radioactivité, c'est-à-dire à des taux de comptage élevés, par exemple supérieur à 100 000 évènements par seconde, des couplages capacitifs, auxquels on aurait pu penser de prime abord pour éliminer ces tensions continues, sont à proscrire. En effet, la présence de telles capacités de couplage provoque un décalage du potentiel de base lié essentiellement à l'apparition répétée et très rapide des scintillations. Ces capacités ont pour conséquence, en effet, de reconstituer une composante continue dépendant justement du taux de comptage. Cependant, les précisions demandées actuellement sur le calcul des signaux de coordonnées nécessitent que les variations erratiques d'amplitude de ces signaux restent inférieures au millième de leur amplitude.

Le document FR-A-2 546 632 propose de résoudre ces inconvénients créés par l'introduction d'un couplage capacitif dans cette chaîne tout en restaurant le potentiel de base avant l'apparition d'une impulsion pondérée à prendre en compte. Selon ce document, on n'autorise la mesure du potentiel de base qu'après la fin d'une période où il y a eu absence d'impulsions, et on restaure le potentiel de base avant une nouvelle intégration pendant la fin de cette période.

L'inconvénient de cette méthode est que, lorsque la caméra est utilisée à fort taux de comptage, c'est-à-dire lorsque l'activité d'émission des photons gamma est élevée, les périodes sans impulsions sont trop brèves pour que la mesure du potentiel de base s'effectue dans des conditions satisfaisantes. Cela entraîne la présence d'une composante continue pendant l'intégration et fausse le résultat.

La présente invention a pour but de remédier à cet inconvénient. A cette fin, elle propose un procédé dans lequel on mesure très simplement le potentiel de base, ce qui permet de corriger en conséquence le signal à traiter. Ce résultat est obtenu grâce à l'élaboration d'un histogramme des échantillons du signal (c'est-à-dire à la détermination de la répartition statistique des amplitudes de ces échantillons). L'histogramme obtenu présente un premier pic correspondant à la grande probabilité d'occurrence d'échantillons ayant comme amplitude le potentiel de base. La mesure de l'abscisse de ce pic fournit directement la valeur moyenne du potentiel de base. Il suffit alors de soustraire cette valeur du signal avant intégration numérique.

De façon précise, la présente invention a donc pour objet un procédé de détection de rayonnement nucléaire, dans lequel on forme un signal de détection constitué d'impulsions de tension auxquelles se superpose une tension parasite dite potentiel de base, on échantillonne ce signal, on convertit chaque échantillon en numérique et on traite ces échantillons numériques pour déterminer une caractéristique du rayonnement nucléaire détecté, ce procédé étant caractérisé par le fait qu'en outre :

- on mesure le potentiel de base en élaborant un histogramme des échantillons numériques, ceux-ci étant formés de manière continue et rapide, et en mesurant, dans cet histogramme, l'abscisse du premier pic d'activité, ce qui donne la valeur du potentiel de base,
- on corrige le signal de détection, avant traitement des échantillons, en soustrayant de ceux-ci la valeur du potentiel de base ainsi mesurée.

La présente invention a également pour objet un appareil de détection de rayonnement nucléaire mettant en oeuvre ce procédé. Cet appareil comprend des moyens de détection d'un rayonnement nucléaire délivrant un signal de détection formé d'impulsions de tension auxquelles se superpose une tension parasite dite potentiel de base, des moyens d'échantillonnage et de conversion analogique-numérique du signal de détection et des moyens de traitement des échantillons aptes à déterminer une caractéristique du rayonnement nucléaire détecté, cet appareil étant caractérisé par le fait qu'il comprend en outre :

- des moyens de mesure du potentiel de base comprenant des moyens disposés après les moyens d'échantillonnage et de conversion analogique-numérique pour élaborer un histogramme des échantillons, ceux-ci étant formés de manière continue et rapide et des moyens pour mesurer, dans cet histogramme, l'abscisse du premier pic d'activité, ce qui donne la valeur du potentiel de base,
- des moyens de correction disposés avant les moyens de traitement, pour retrancher des échantillons à traiter ladite valeur du potentiel de base.

Lorsque les moyens de détection et les moyens d'échantillonnage et de conversion numérique comprennent plusieurs voies en parallèle, les moyens de mesure du potentiel de base peuvent être soit partagés entre les différentes voies par multiplexage, soit disposés sur chaque voie.

Dans un mode de réalisation avantageux et pour mettre les moyens de conversion analogique-numérique dans les meilleures conditions de fonctionnement, l'appareil comprend en outre des moyens de décalage analogique du signal détecté, ces moyens étant commandés par les moyens de mesure du potentiel de base.

L'appareil de l'invention peut être avantageusement une gamma-caméra, auquel cas la caractéristique à déterminer est la position d'un rayonnement gamma.

De toute façon, les caractéristiques et avantages de l'invention apparaîtront mieux à la lumière de la description qui va suivre. Cette description porte sur des exemples de réalisation donnés à titre explicatif et nullement limitatif et elle se réfère à des dessins annexés, sur lesquels :

- la figure 1 montre le schéma synoptique d'un appareil conforme à l'invention, dans sa structure la plus générale ;
- la figure 2 montre un exemple de signal à traiter ;
- la figure 3 montre un exemple d'histogramme ;
- la figure 4 illustre un appareil conforme à l'invention dans un mode de réalisation à multiplexage ;
- la figure 5 illustre un mode de réalisation des moyens de mesure du potentiel de base ;
- la figure 6 illustre une gamma-caméra conforme à l'invention.

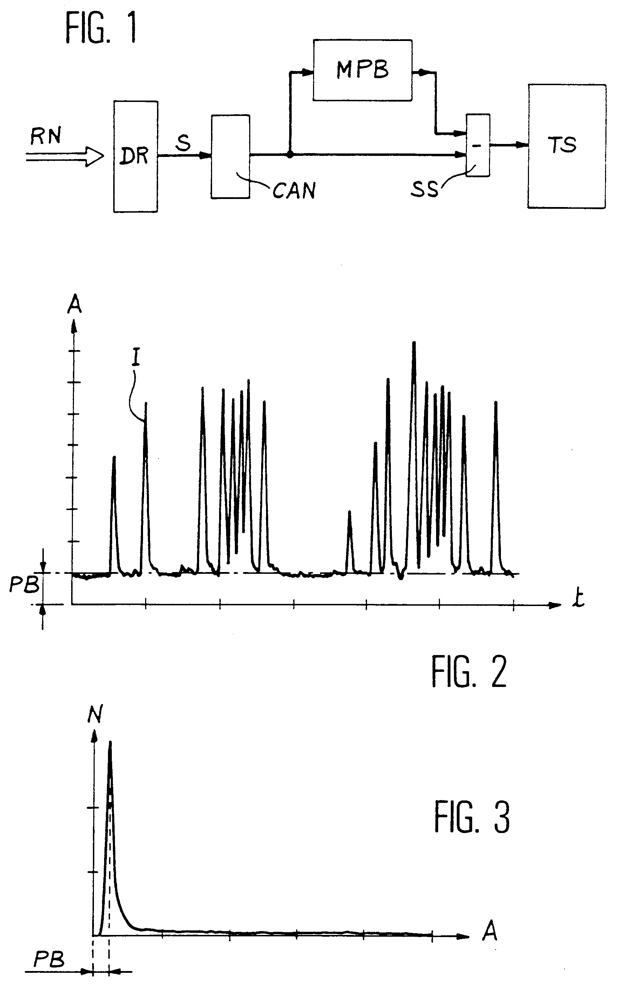

On voit, sur la figure 1, un détecteur de rayonnement DR recevant et détectant un rayonnement nucléaire RN et délivrant un signal de détection S. Ce signal est échantillonné et converti en numérique par le convertisseur CAN. Ce convertisseur travaille de manière continue et il est rapide. Il est continu en ce sens qu'il échantillonne tout le signal (c'est-à-dire non seulement les impulsions mais aussi la partie entre celles-ci qui est justement le potentiel de base que l'on veut mesurer). Il est rapide en ce sens qu'il délivre plusieurs échantillons par impulsion. L'appareil représenté comprend également des moyens de traitement du signal TS.

Selon l'invention, l'appareil comprend encore des moyens MPB de mesure du potentiel de base. Ces moyens sont reliés au convertisseur CAN et sont aptes à élaborer un histogramme des échantillons formés par le convertisseur CAN et aptes en outre à mesurer, dans cet histogramme, l'abscisse du premier pic d'activité, ce qui donne la valeur du potentiel de base.

L'appareil comprend encore des moyens de correction, en pratique un soustracteur SS, disposés avant les moyens de traitement du signal, et reliés aux moyens MPB et CAN pour retrancher des échantillons à traiter ladite valeur du potentiel de base.

Le fonctionnement de cet appareil, en particulier des moyens de mesure du potentiel de base, peut être illustré à l'aide des figures 2 et 3.

Sur la figure 2, tout d'abord, on voit, dans le cas particulier d'un rayonnement gamma détecté par un détecteur tel qu'on le trouve dans une gamma-caméra, des impulsions I superposées à un potentiel de base PB. C'est ce genre de signal qui est échantillonné et codé rapidement. Les échantillons ainsi formés, ou éventuellement une partie 1/n de ceux-ci si cela suffit, sont traités pour dresser un histogramme. Celui-ci présente généralement l'allure de la figure 3. Dans un tel histogramme, les amplitudes sont portées en abscisses et le nombre d'impulsions ayant une amplitude donnée est porté en ordonnées. Un pic nettement marqué se dessine alors, qui correspond aux échantillons d'amplitude égale au potentiel de base. L'abscisse de ce pic donne immédiatement l'amplitude du potentiel de base.

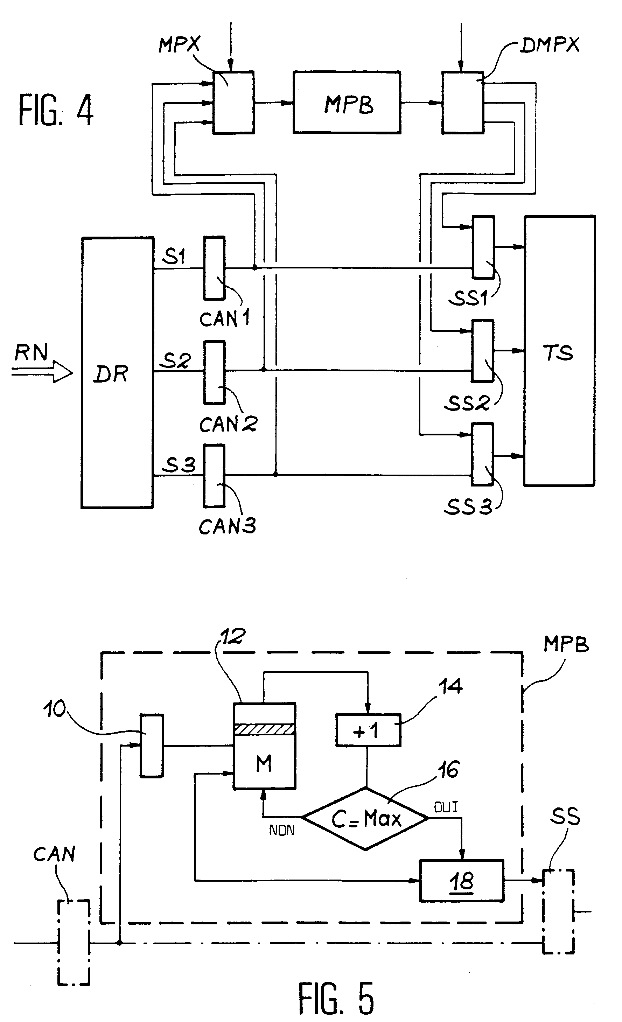

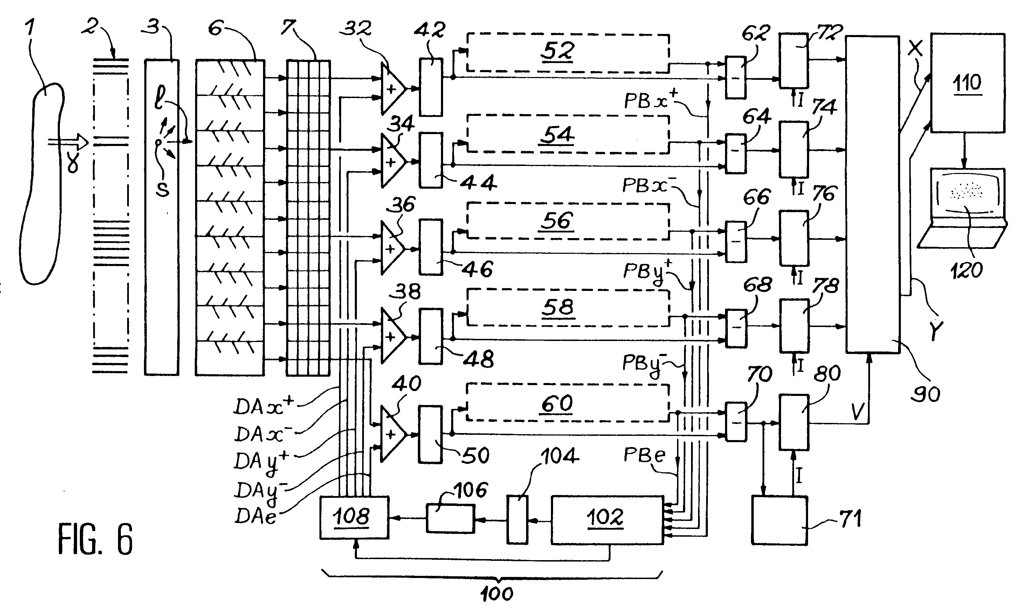

Lorsque l'appareil comprend plusieurs voies de traitement, ce qui est souvent le cas dans les gamma-caméras, les moyens MPB de mesure du potentiel de base peuvent être associés à chacune de ces voies (comme il sera expliqué plus loin en liaison avec la figure 6). Mais ils peuvent être uniques et partagés entre toutes les voies, comme illustré sur la figure 4.

Sur cette figure, on voit trois voies où trois signaux S1, S2 et S3 sont convertis par trois moyens CAN1, CAN2 et CAN3. Les moyens de mesure des trois potentiels de base relatifs à ces trois voies sont constitués par un seul circuit MPB précédé d'un multiplexeur MPX et suivi d'un démultiplexeur DMPX. Les trois valeurs des potentiels de base sont adressées successivement à trois soustracteurs SS1, SS2, SS3 pour correction des trois signaux avant traitement.

Quelle que soit la variante de l'appareil, les moyens de mesure du potentiel de base peuvent prendre des formes diverses. Sur la figure 5, est représenté un mode particulier de réalisation de ces moyens, lesquels comprennent un registre d'adresses 10 relié aux moyens de conversion analogique-numérique CAN, une mémoire 12 dont chaque cellule est adressée par ledit registre, un moyen 14 apte à incrémenter d'une unité le contenu de chaque cellule chaque fois qu'elle est adressée, un comparateur 16 déterminant l'instant où le contenu C d'une des cellules atteint une valeur maximum donnée, un moyen 18 qui peut prendre diverses formes :

- selon un premier mode de réalisation, ce moyen 18 est du genre verrou (ou "latch" en terminologie anglosaxonne) ; ce verrou vient lire l'adresse de la première cellule ayant atteint le maximum, adresse qui donne l'abscisse du pic de l'histogramme, donc la valeur du potentiel de base ;
- selon un second mode de réalisation, le moyen 18 est une unité centrale de traitement, apte à lire les contenus et les adresses des cellules de la mémoire et à effectuer le calcul du barycentre des adresses affectées desdits contenus (à partir d'un contenu prédéterminé par un seuil) ; l'abscisse de ce barycentre donne encore la valeur du potentiel de base.

On comprend ainsi, que, dans la définition qui a été donnée de l'invention, l'expression "abscisse du pic" peut signifier abscisse du maximum du pic ou abscisse du barycentre du pic. D'une façon générale, c'est une abscisse permettant de localiser le pic dans l'histogramme.

La figure 6, enfin, illustre une application de l'invention à la réalisation d'une gamma-caméra destinée à localiser le rayonnement gamma provenant d'un organe 1 d'un patient. Telle que représentée, cette gamma-caméra comprend :

- un collimateur de rayonnement 2,
- une couche 3 de matériau scintillateur apte à produire par scintillation $\underline{s}$ un rayonnement lumineux $\underline{l}$,
- des moyens de photodétection 6 disposés en regard de la couche de scintillateur et délivrant des signaux électriques, ces moyens pouvant être des photomultiplicateurs,
- des jeux de résistances de pondération 7 recevant les signaux électriques délivrés par les moyens de photodétection 6 et délivrant quatre signaux électriques $x^+$, $x^-$, $y^+$, $y^-$ de forme impulsionnelle, les deux signaux $x^+$, $x^-$ traduisant la position de la scintillation $\underline{s}$ par rapport à un premier axe X, et les deux signaux $y^+$, $y^-$ traduisant la position de cette scintillation par rapport à un second axe Y,
- quatre circuits de décalage 32, 34, 36, 38 recevant les signaux $x^+$, $x^-$, $y^+$, $y^-$ et quatre tensions de décalage analogique $DAx^+$, $DAx^-$, $DAy^+$ et $DAy^-$ dont on verra plus loin le mode de formation,
- quatre convertisseurs analogique-numérique rapides 42, 44, 46, 48 recevant les quatre signaux $x^+$, $x^-$, $y^+$, $y^-$, après décalage,
- quatre moyens 52, 54, 56, 58 de mesure du potentiel de base relatif aux quatre signaux $x^+$, $x^-$, $y^+$, $y^-$, ces quatre moyens ayant leur entrée reliée respectivement aux quatre convertisseurs analogique-numérique 42, 44, 46, 48 et délivrant les quatre potentiels de base $PBx^+$, $PBx^-$, $PBy^+$, $PBy^-$,
- quatre soustracteurs 62, 64, 66, 68 à deux entrées, respectivement reliées au convertisseur analogique et à la sortie des moyens de mesure du potentiel de base,
- quatre intégrateurs numériques 72, 74, 76, 78 reliés aux quatre soustracteurs, ces quatre intégrateurs numériques délivrant quatre sommes pondérées numériques $X_N^+$, $X_N^-$, $Y_N^+$, $Y_N^-$,
- un circuit de calcul 90 recevant ces sommes pondérées et délivrant deux signaux X et Y définissant la position de la scintillation,
- un moyen de visualisation 120 à mémoire d'image 110.

Selon une variante avantageuse, la gamma-caméra comprend en outre :

- un cinquième circuit de décalage 40 recevant un signal représentant l'énergie $\underline{e}$ du rayonnement,
- un cinquième convertisseur analogique-numérique 50,
- un cinquième moyen 60 de mesure du potentiel de base relatif au signal d'énergie e,
- un cinquième soustracteur 70 ayant une première entrée reliée au cinquième moyen 50 délivrant le signal d'énergie et une seconde entrée reliée au cinquième moyen 60 de mesure du potentiel de base,
- un circuit 71 de détection du maximum du signal délivré par le cinquième soustracteur, ce circuit délivrant un signal I de validation de tous les intégrateurs 72, 74, 76, 78,
- un cinquième intégrateur numérique 80 validé également par le circuit précédent 71 et délivrant un signal $E_N$ qui est pris comme signal de validation V des moyens de calcul numérique 90.

Les circuits de décalage 32, 34, 36, 38 et 40 sont alimentés par des tensions analogiques respectivement $DAx^+$, $DAx^-$, $DAy^+$, $DAy^-$ et DAe délivrés par des moyens 100. Ces moyens comprennent une unité centrale de traitement 102 à cinq entrées reliées aux sorties des cinq circuits de mesure des valeurs des potentiels de base 52, 54, 56, 58 et 60, ces entrées recevant lesdites valeurs $PBx^+$, $PBx^-$, $PBy^+$, $PBy^-$ et PBe codées en numérique. Cette unité 102 calcule les décalages (ou "offset" en terminologie anglosaxonne) à apporter au signal incident pour mettre les convertisseurs analogique-numériques dans les meilleures conditions de fonctionnement (précision et dynamique). Ces décalages sont transmis séquentiellement à un registre 104 puis convertis en analogique par un convertisseur numérique-analogique 106 et adressés à un multiplexeur 108 à une entrée et cinq sorties reliées respectivement aux cinq circuits de décalage 32, 34, 36, 38 et 40 pour l'application de cinq tensions de décalage analogique $DAx^+$, $DAx^-$, $DAy^+$, $DAy^-$ et $DAe$.

Les signaux de position X et Y peuvent être obtenus à partir des signaux intégrés numériques $X_N^+$, $X_N^-$, $Y_N^+$ et $Y_N^-$ par les formules suivantes :

$$X = \frac{X_N^+ - X_N^-}{X_N^+ + X_N^-} \qquad Y = \frac{Y_N^+ - Y_N^-}{Y_N^+ + Y_N^-}$$

comme décrit dans le document FR-A-2 615 959.

**Revendications**

1. Procédé de détection de rayonnement nucléaire, dans lequel on forme un signal de détection constitué d'impulsions de tension auxquelles se superpose une tension parasite dite potentiel de base, on échantillonne ce signal, on convertit chaque échantillon en numérique et on traite ces échantillons numériques pour déterminer une caractéristique du rayonnement nucléaire détecté, ce procédé étant caractérisé par le fait qu'en outre :
   - on mesure le potentiel de base en élaborant un histogramme des échantillons numériques, ceux-ci étant formés de manière continue et rapide, et en mesurant, dans cet histogramme, l'abscisse du premier pic d'activité, ce qui donne la valeur du potentiel de base,
   - on corrige le signal de détection, avant traitement des échantillons, en soustrayant de ceux-ci la valeur du potentiel de base ainsi mesurée.

2. Appareil de détection de rayonnement nucléaire, mettant en oeuvre le procédé de la revendication 1, cet appareil comprenant des moyens de détection d'un rayonnement nucléaire (DR) délivrant un signal de détection (S) formé d'impulsions de tension auxquelles se superpose une tension parasite dite potentiel de base, des moyens d'échantillonnage et de conversion analogique-numérique (CAN) du signal de détection et des moyens de traitement des échantillons (TS) aptes à déterminer une caractéristique du rayonnement nucléaire détecté, cet appareil étant caractérisé par le fait qu'il comprend en outre :
   - des moyens de mesure du potentiel de base (MPB) comprenant des moyens disposés après les moyens d'échantillonnage et de conversion analogique-numérique (CAN) pour élaborer un histogramme des échantillons, ceux-ci étant formés de manière continue et rapide et des moyens pour mesurer, dans cet histogramme, l'abscisse du premier pic d'activité, ce qui donne la valeur du potentiel de base,
   - des moyens de correction (SS) disposés avant les moyens de traitement (TS), pour retrancher des échantillons à traiter ladite valeur du potentiel de base.

3. Appareil de détection de rayonnement nucléaire selon la revendication 2, caractérisé par le fait que, les moyens de détection (DR) et les moyens d'échantillonnage et de conversion en numérique (CAN) comprenant plusieurs voies en parallèle, les moyens de mesure de la valeur du potentiel de base (MPB) sont partagés entre ces voies par des moyens de multiplexage et démultiplexage (MPX, DMPX).

4. Appareil de détection de rayonnement nucléaire selon la revendication 2, caractérisé par le fait que les moyens de détection (DR) et les moyens d'échantillonnage et de conversion en numérique (CAN) comprenant plusieurs voies en parallèle, les moyens de mesure de la valeur du potentiel de base (MPB) et de correction sont prévus sur chaque voie.

5. Appareil de détection de rayonnement nucléaire selon la revendication 2, caractérisé par le fait qu'il comprend en outre des moyens (100) de décalage analogique du signal détecté (S), ces moyens (100) étant commandés par les moyens de mesure du potentiel de base (MPB).

6. Appareil selon la revendication 2, caractérisé par le fait que les moyens de mesure du potentiel de base comprennent un registre d'adresses (10) relié aux moyens de conversion analogique-numérique, une mémoire (12) dont chaque cellule est adressée par ledit registre, un moyen (14) d'incrémentation d'une unité du contenu de chaque cellule chaque fois qu'elle est adressée, un moyen (16) de détermination de l'instant où le contenu d'une des cellules atteint une valeur maximum donnée, un moyen (18) pour lire l'adresse de la cellule ayant atteint ce maximum, adresse qui donne l'abscisse du pic de l'histogramme, donc la valeur du potentiel de base.

7. Appareil selon la revendication 2, caractérisé par le fait que les moyens de mesure du potentiel de base comprennent un registre d'adresses (10) relié aux moyens de conversion analogique-numérique, une mémoire (12) dont chaque cellule est adressée par ledit registre, un moyen (14) d'incrémentation d'une unité du contenu de chaque cellule chaque fois qu'elle est adressée, un moyen (16) de détermination de l'instant où le contenu d'une des cellules atteint une valeur maximum donnée, un moyen (18) apte à lire les contenus et les adresses des cellules de la mémoire et à effectuer le calcul du barycentre des adresses affectées desdits contenus, l'abscisse du barycentre donnant la valeur du potentiel de base.

8. Appareil de détection de rayonnement nucléaire selon l'une quelconque des revendications 2 à 7, caractérisé par le fait qu'il s'agit d'une gamma caméra, la caractéristique à déterminer étant la position d'un rayonnement gamma.

9. Gamma-caméra selon la revendication 8, caractérisée par le fait qu'elle comprend :
   - une couche (3) de matériau scintillateur apte à recevoir un rayonnement gamma et à produire par scintillation (s) un rayonnement lumineux,
   - des moyens de photodétection (6) disposés en regard de la couche de scintillateur et délivrant des signaux électriques,
   - des jeux de résistances de pondération (7) recevant les signaux électriques délivrés par les moyens de photodétection (6) et délivrant quatre signaux électriques $x^+$, $x^-$, $y^+$, $y^-$ de forme impulsionnelle, les deux signaux $x^+$, $x^-$ traduisant la position de la scintillation (s) par rapport à un premier axe X, et les deux signaux $y^+$, $y^-$ traduisant la position de la scintillation (s) par rapport à un second axe Y,
   - quatre convertisseurs analogique-numérique rapides (42, 44, 46, 48) recevant les quatre signaux $x^+$, $x^-$, $y^+$, $y^-$,
   - quatre moyens (52, 54, 56, 58) de mesure du potentiel de base relatif à ces quatre signaux $x^+$, $x^-$, $y^+$, $y^-$, ces quatre moyens ayant leur entrée reliée respectivement aux quatre convertisseurs numérique-analogique (42, 44, 46, 48),
   - quatre soustracteurs (62, 64, 66, 68) à deux entrées, respectivement reliées l'une à un convertisseur analogique et l'autre à la sortie des moyens de mesure du potentiel de base,
   - quatre intégrateurs numériques (72, 74, 76, 78), reliés aux quatre soustracteurs, ces quatre intégrateurs numériques délivrant quatre sommes pondérées numériques $X_N^+$, $X_N^-$, $Y_N^+$, $Y_N^-$,
   - un circuit de calcul (90) de la position de la scintillation.

10. Gamma-caméra selon la revendication 9, caractérisée par le fait qu'elle comprend en outre un moyen de visualisation (120) à mémoire d'image (110).

11. Gamma-caméra selon la revendication 10, caractérisée par le fait qu'elle comprend en outre :
   - un cinquième moyen (50) pour délivrer un signal numérique $e_{(N)}$ représentant l'énergie (e) du rayonnement,
   - un cinquième moyen (60) de mesure du potentiel de base relatif au signal d'énergie (e),
   - un cinquième soustracteur (70) ayant une première entrée reliée au cinquième moyen (50) délivrant le signal d'énergie et une seconde entrée reliée au cinquième (60) moyen de mesure du potentiel de base,
   - un cinquième intégrateur numérique (80) relié au cinquième soustracteur (70) et délivrant un signal (E) qui est pris comme signal de validation (V) des moyens de calcul numérique (90).

12. Gamma-caméra selon la revendication 11, caractérisée par le fait qu'elle comprend en outre un circuit (71) de détection du maximum du signal délivré par le cinquième soustracteur et relié d'une part à un cinquième soustracteur et d'autre part à tous les intégrateurs, ce circuit (71) de détection du maximum délivrant un signal (I) de validation de tous les intégrateurs (72, 74, 76, 78, 80).

13. Gamma-caméra selon l'une quelconque des revendications 8 à 12, caractérisée par le fait que les moyens de photodétection sont des photomultiplicateurs (6).

14. Gamma-caméra selon l'une quelconque des revendications 8 à 13, caractérisée par le fait qu'elle comprend en outre un collimateur (2) de rayonnement gamma placé devant la couche (3) de matériau scintillateur.

**Patentansprüche**

1. Verfahren zur Detektion nuklearer Strahlung, bei dem man ein Detektionssignal bildet, das aus Spannungsimpulsen besteht, denen sich eine parasitäre, Basispotential genannte Spannung überlagert, wobei man dieses Signal abtastet, jeden Abtastwert digitalisiert und diese numerischen Abtastwerte verarbeitet, um eine Eigenschaft der detektierten nuklearen Strahlung zu bestimmen, wobei dieses Verfahren durch die Tatsache gekennzeichnet ist, daß darüber hinaus:

- man das Basispotential mißt, indem man ein Histogramm der digitalen Abtastwerte ausarbeitet, wobei diese in einer kontinuierlichen und schnellen Weise gebildet werden, und indem man in diesem Histogramm die Abszisse des ersten Aktivitätspeaks mißt, was den Wert des Basispotentials ergibt,

- man das Detektionssignal vor der Verarbeitung der Abtastwerte korrigiert, indem man von diesen den Wert des so gemessenen Basispotentials subtrahiert.

2. Gerät zur Detektion nuklearer Strahlung, welches das Verfahren von Anspruch 1 ausführt, wobei dieses Gerät Detektionseinrichtungen für eine nukleare Strahlung (DR), die ein Detektionssignal (S) liefern, das aus Spannungsimpulsen gebildet wird, denen sich eine parasitäre, Basispotential genannte Spannung überlagert, Einrichtungen zur Abtastung und AnalogDigital-Wandlung (CAN) des Detektionssignals und Einrichtungen zur Verarbeitung der Abtastwerte (TS) umfaßt, die geeignet sind, eine Eigenschaft der detektierten nuklearen Strahlung zu bestimmen, wobei dieses Gerät durch die Tatsache gekennzeichnet ist, daß es darüber hinaus umfaßt:

- Einrichtungen zur Messung des Basispotentials (MPB), die Einrichtungen, welche hinter den Einrichtungen zur Abtastung und Analog-Digital-Wandlung (CAN) angeordnet sind, um ein Histogramm der Abtastwerte auszuarbeiten, wobei diese in einer kontinuierlichen und schnellen Weise gebildet werden, und Einrichtungen umfassen, um in diesem Histogramm die Abszisse des ersten Peaks der Aktivität zu messen, was den Wert des Basispotentials ergibt,

- Einrichtungen zur Korrektur (SS), die vor den Einrichtungen zur Verarbeitung (TS) angeordnet sind, um von den zu verarbeitenden Abtastwerten den genannten Wert des Basispotentials abzuziehen.

3. Gerät zur Detektion nuklearer Strahlung nach Anspruch 2, durch die Tatsache gekennzeichnet, daß die Detektionseinrichtungen (DR) und die Einrichtungen zur Abtastung und Digitalisierung (CAN) mehrere parallele Kanäle umfassen, wobei die Einrichtungen zur Messung des Basispotentialwertes (MPB) auf diese Kanäle mittels Multiplex- und Demultiplex-Einrichtungen (MPX, DMPX) verteilt werden.

4. Gerät zur Detektion nuklearer Strahlung nach Anspruch 2, durch die Tatsache gekennzeichnet, daß die Detektionseinrichtungen (DR) und die Einrichtungen zur Abtastung und Digitalisierung (CAN) mehrere parallele Kanäle umfassen, wobei die Einrichtungen zur Messung des Basispotentialwertes (MPB) und zur Korrektur auf jedem Kanal vorgesehen sind.

5. Gerät zur Detektion nuklearer Strahlung nach Anspruch 2, durch die Tatsache gekennzeichnet, daß es ferner Einrichtungen (100) zur Analogverschiebung des detektierten Signals (S) umfaßt, wobei diese Einrichtungen (100) durch die Einrichtungen zur Messung des Basispotentials (MPB) gesteuert werden.

6. Gerät nach Anspruch 2, durch die Tatsache gekennzeichnet, daß die Einrichtungen zur Messung des Basispotentials ein Adressenregister (10), welches mit den Einrichtungen zur Analog-Digital-Wandlung verbunden ist, einen Speicher (12), von dem jede Zelle durch genanntes Register adressiert wird, eine Einrichtung (14), um den Inhalt jeder Zelle jedesmal, wenn sie adressiert wird, um Eins zu erhöhen, eine Einrichtung (16) zur Bestimmung des Zeitpunktes, in dem der Inhalt einer der Zellen einen gegebenen Maximalwert erreicht, und eine Einrichtung (18) umfassen, um die Adresse der Zelle zu lesen, die dieses Maximum erreicht hat, wobei diese Adresse den Abszissenwert des Peaks des Histogramms liefert, also den Wert des Basispotentials.

7. Gerät nach Anspruch 2, durch die Tatsche gekennzeichnet, daß die Einrichtungen zur Messung des Basispotentials ein Adressenregister (10), welches mit den Einrichtungen zur Analog-Digital-Wandlung verbunden ist, einen Speicher (12), von dem jede Zelle durch genanntes Register adressiert wird, eine Einrichtung (14), um den Inhalt jeder Zelle jedesmal, wenn sie adressiert wird, um Eins zu erhöhen, eine Einrichtung (16) zur Bestimmung des Zeitpunktes, in dem der Inhalt einer der Zellen einen gegebenen Maximalwert erreicht, und eine Einrichtung (18) umfassen, die geeignet ist, die Inhalte und die Adressen der Zellen des Speichers zu lesen und die Berechnung des Schwerpunktes der von genannten Inhalten betroffenen Adressen durchzuführen, wobei die Abszisse des Schwerpunktes den Wert des Basispotentials ergibt.

8. Gerät zur Detektion nuklearer Strahlung nach einem der Ansprüche 2 bis 7, durch die Tatsache gekennzeichnet, daß es sich um eine Gamma-Kamera handelt, wobei die zu bestimmende Eigenschaft die räumliche Lage einer Gamma-Strahlung ist.

9. Gamma-Kamera nach Anspruch 8, gekennzeichnet durch die Tatsache, daß sie umfaßt:
   - eine Schicht (3) von Szintillatormaterial, die geeignet ist, eine Gammastrahlung zu empfangen und durch Szintillation (s) Lichtstrahlung zu produzieren,
   - Einrichtungen zur Photodetektion (6), die gegenüber der Szintillatorschicht angeordnet sind und elektrische Signale liefern,
   - Sätze von Gewichtungswiderständen (7), die die von den Einrichtungen zur Photodetektion (6) gelieferten elektrischen Signale empfangen und vier impulsförmige elektrische Signale $x^+$, $x^-$, $y^+$, $y^-$ liefern, wobei die beiden Signale $x^+$, $x^-$ die Lage der Szintillation (s) gegenüber einer ersten Achse X ausdrücken und die beiden Signale $y^+$, $y^-$ die Lage der Szintillation (s) gegenüber einer zweiten Achse Y ausdrücken,
   - vier schnelle Analog-Digital-Wandler (42, 44, 46, 48), die die vier Signale $x^+$, $x^-$, $y^+$, $y^-$ erhalten,
   - vier Einrichtungen (52, 54, 56, 58) zur Messung des Basispotentials hinsichtlich dieser vier Signale $x^+$, $x^-$, $y^+$, $y^-$, wobei diese vier Einrichtungen ihren Eingang jeweils mit den vier Digital-Analog-Wandlern (42, 44, 46, 48) verbunden haben,
   - vier Subtrahierer (62, 64, 66, 68) mit zwei Eingängen, von welchen jeweils der eine mit einem Analog-Wandler und der andere mit dem Ausgang der Einrichtungen zur Messung des Basispotentials verbunden ist,
   - vier numerische Integratoren (72, 74, 76, 78), die mit den vier Subtrahierern verbunden sind, wobei diese vier numerischen Integratoren vier gewichtete numerische Summen $X_N^+$, $X_N^-$, $Y_N^+$, $Y_N^-$ liefern,
   - eine Rechenschaltung (90) für die Lage der Szintillation.

10. Gamma-Kamera nach Anspruch 9, durch die Tatsache gekennzeichnet, daß sie ferner eine Anzeigeeinrichtung (120) mit Bildspeicher (110) besitzt.

11. Gamma-Kamera nach Anspruch 10, durch die Tatsache gekennzeichnet, daß sie ferner umfaßt:
   - eine fünfte Einrichtung (50), um ein die Strahlungsenergie (e) darstellendes digitales Signal $e_{(N)}$ zu liefern,
   - eine fünfte Einrichtung (60) zur Messung des Basispotentials hinsichtlich des Energiesignals (e),
   - einen fünften Subtrahierer (70), der einen ersten, mit der fünften Einrichtung (50), die das Energiesignal liefert, verbundenen Eingang und einen zweiten, mit der fünften Einrichtung (60) zur Messung des Basispotentials verbundenen Eingang besitzt,
   - einen fünften numerischen Integrator (80), der mit dem fünften Subtrahierer (70) verbunden ist und ein Signal (E) liefert, das als Freigabesignal (V) für die Einrichtungen zur numerischen Berechnung (90) genommen wird.

12. Gamma-Kamera nach Anspruch 11, durch die Tatsache gekennzeichnet, daß sie ferner eine Schaltung (71) zur Detektion des Maximums des von dem fünften Subtrahierer gelieferten Signals umfaßt und einerseits mit einem fünften Subtrahierer und andererseits mit allen Integratoren verbunden ist, wobei diese Schaltung (71) zur Detektion des Maximums ein Freigabesignal (I) für alle Integratoren (72, 74, 76, 78, 80) liefert.

13. Gamma-Kamera nach einem der Ansprüche 8 bis 12, durch die Tatsache gekennzeichnet, daß die Einrichtungen zur Photodetektion Photomultiplier (6) sind.

14. Gamma-Kamera nach einem der Ansprüche 8 bis 13, durch die Tatsache gekennzeichnet, daß sie ferner einen Kollimator (2) für Gamma-Strahlung umfaßt, der vor der Schicht (3) des Szintillatormaterials angeordnet ist.

**Claims**

1. Process for the detection of nuclear radiation, in which a detection signal is formed, which is constituted by voltage pulses on which are superimposed a spurious voltage called the base potential, said signal is sampled, each sample is converted into digital form and the digital samples are processed in order to determine a characteristic of the detected nuclear radiation, characterized by the measurement of the base potential by producing a histogram of the digital samples, which are formed continuously and rapidly, and by measuring within the said histogram the abscissa of the first activity peak, which gives the value of the base potential and the detection signal is corrected, prior to the processing of the samples, by subtracting therefrom the value of the thus measured base potential.

2. Apparatus for the detection of nuclear radiation, performing the process of claim 1, said apparatus comprising means (DR) for detecting a nuclear radiation supplying a detection signal (S) formed by voltage pulses on which are superimposed a spurious voltage called a base potential, means (CAN) for sampling an analog - digital conversion of the detection signal and processing means (TS) of the sample able to determine a characteristic of the detected nuclear radiation, characterized in that it also comprises means (MPB) for measuring the base potential incorporating means positioned after the sampling and analog - digital conversion means (CAN) in order to produce a histogram of the samples, which are formed in a continuous and rapid manner, and means for measuring, within the said histogram, the abscissa of the first activity peak, which gives the value of the base potential and correction means (SS) positioned upstream of the processing means (TS) for subtracting the base potential value from the samples to be processed.

3. Apparatus for the detection of nuclear radiation according to claim 2, characterized in that the detection means (DR) and the digital sampling and conversion means (CAN) incorporate several channels in parallel, the means for measuring the base potential value (MPB) being split up between these channels by multiplexing and demultiplexing means (MPX, DMPX).

4. Apparatus for the detection of nuclear radiation according to claim 2, characterized in that the detection means (DR) and the digital sampling and conversion means (CAN) incorporate several channels in parallel, the base potential value measuring means (MPB) and correcting means being provided on each channel.

5. Apparatus for the detection of nuclear radiation according to claim 2, characterized in that it also comprises means (100) for the analog shifting of the detected signal (S), said means (100) being controlled by the base potential measuring means (MPB).

6. Apparatus according to claim 2, characterized in that the base potential measuring means incorporate an address register (10) connected to the analog - digital conversion means, a memory (12), whereof each cell is addressed by said register, a means (14) for incrementing by one unit the content of each cell whenever it is addressed, a means (16) for determining the instant when the content of one of the cells reaches a maximum given value, a means (18) for reading the address of the cell having reached this maximum, said address giving the abscissa of the histogram peak, i.e. the base potential value.

7. Apparatus according to claim 2, characterized in that the base potential measuring means incorporate an address register (10) connected to the analog - digital conversion means, a memory (12), whereof each cell is addressed by said register, a means (14) for incrementing by one unit the content of each cell whenever it is addressed, a means (16) for determining the instant when the content of one of the cells reaches a given maximum value, a means (18) able to read the contents and addresses of the cells of the memory and carry out the calculation of the barycentre of the addresses allocated said content, the abscissa of the barycentre giving the base potential value.

8. Apparatus for detecting nuclear radiation according to any one of the claims 2 to 7, characterized in that it is a gamma-camera, the characteristics to be determined being the position of a gamma radiation.

9. Gamma-camera according to claim 8, characterized in that it comprises:
   - a layer (3) of scintillating material able to receive a gamma radiation and produce a light radiation per scintillation (s);
   - photodetection means (6) positioned facing the scintillating layer and supplying electric signals;
   - arrays of weighting resistors (7) receiving the electric signals supplied by the photodetection means (6) and supplying four electric signals $x^+$, $x^-$, $y^+$, $y^-$ in pulse-like form, the two signals $x^+$, $x^-$ translating the position of the scintillation (s) relative to a first axis X and the two signals $y^+$, $y^-$ translating the position of the scintillation (s) relative to a second axis Y;
   - four fast analog - digital converters (42, 44, 46, 48) receiving the four signals $x^+$, $x^-$, $y^+$, $y^-$;
   - four means (52, 54, 56, 58) for measuring the base potential relative to these four signals x , x , y , y , said four means having their input connected respectively to the four digital - analog converters (42, 44, 46, 48);
   - four subtractors (62, 64, 66, 68) having two inputs, respectively connected on the one hand to an analog converter and on the other to the output of the base potential measuring means;
   - four digital integrators (72, 74, 76, 78) connected to the four subtractors, said four digital integrators supplying four digital weighted sums $X_N^+$, $X_N^-$, $Y_N^+$, $Y_N^-$;
   - a circuit (90) for calculating the position of the scintillation.

10. Gamma-camera according to claim 9, characterized in that it also comprises a display means (120) having an image memory (110).

11. Gamma-camera according to claim 10, characterized in that it also comprises:
    - a fifth means (50) for supplying a digital signal $e_{(N)}$ representing the energy (e) of the radiation;
    - a fifth means (60) for measuring the base potential relative to the energy signal (e);
    - a fifth subtractor (70) having a first input connected to the fifth means (50) supplying the energy signal and a second input connected to the fifth means (60) for measuring the base potential;
    - a fifth digital integrator (80) connected to the fifth subtractor (70) and supplying a signal (E), which is taken as the validation signal (V) of the digital calculating means (90).

12. Gamma-camera according to claim 11, characterized in that it also comprises a circuit (71) for detecting the maximum of the signal supplied by the fifth subtractor and connected on the one hand to a fifth subtractor and on the other to all the integrators, said maximum detection circuit (71) supplying a validation signal (I) for all the integrators (72, 74, 76, 78, 80).

13. Gamma-camera according to any one of the claims 8 to 12, characterized in that the photodetection means are photomultipliers (6).

14. Gamma-camera according to any one of the claims 8 to 13, characterized in that it also comprises a gamma radiation collimator placed in front of the scintillating material layer (3).

FIG. 1

FIG. 2

FIG. 3

EP 0 487 403 B1

FIG. 4

MPX

MPB

DMPX

RN → DR

S1 CAN1
S2 CAN2
S3 CAN3

SS1
SS2
SS3

TS

FIG. 5

MPB

10

12

14 +1

16 C=Max

OUI

NON

18

CAN

SS

13

FIG. 6

EP 0 487 403 B1